# FASCICULE DE BREVET EUROPEEN

(11) **EP 0 626 508 B1**
(45) Date de publication et mention de la délivrance du brevet: **16.10.1996**
(21) Numéro de dépôt: 94401046.1
(22) Date de dépôt: 10.05.1994
(51) Int. Cl.: F02B 19/18

(54) **Moteur à allumage par compression comportant au moins un cylindre et une préchambre communiquant par l'intermédiaire de deux canaux de transfert**
Dieselbrennkraftmaschine mit wenigstens einem Zylinder und einer Vorkammer die über zwei Überströmkanäle miteinander verbunden sind
Diesel engine having at least a cylinder and a precombustion chamber connected to each other though two transfer passages

(30) Priorité: 24.05.1993 FR 9306162
(43) Date de publication de la demande: 30.11.1994
(73) Titulaire: AUTOMOBILES PEUGEOT, 75116 Paris (FR); AUTOMOBILES CITROEN, 92200 Neuilly-sur-Seine (FR)
(72) Inventeur: Cohen, Léopold, F-75017 Paris (FR); Marez, Patrice, F-92250 La Garenne Colombes (FR)
(74) Mandataire: Bouget, Lucien

(56) Documents cités:
- EP-A- 0 281 851
- DE-C- 658 534
- FR-A- 563 695
- GB-A- 379 605
- GB-A- 870 774
- GB-A- 2 159 879
- US-A- 2 271 606
- PATENT ABSTRACTS OF JAPAN vol. 7, no. 5 (M-184) (1150) 11 Janvier 1983 & JP-A-57 165 624 (NISSAN) 12 Octobre 1982

## Description

L'invention concerne un moteur à allumage par compression comportant au moins un cylindre et une préchambre communiquant avec le cylindre par l'intermédiaire d'un premier canal de transfert et d'un second canal de transfert sensiblement rectilignes.

On connaît des moteurs à allumage par compression ou moteurs Diesel comportant, associée à chacun de leurs cylindres, une préchambre qui communique avec le cylindre par l'intermédiaire d'un canal de transfert rectiligne et dans laquelle débouche un injecteur de carburant disposé de manière à pouvoir injecter un jet de carburant à l'intérieur de la préchambre.

Le moteur comporte un bloc cylindre au-dessus duquel est placée une culasse à l'intérieur de laquelle sont disposées les préchambres de turbulence de forme approximativement sphérique. Le canal de transfert permet de relier la préchambre à une chambre principale qui est délimitée, à l'intérieur du cylindre correspondant, par la tête du piston et par une partie adjacente de la culasse.

Dans le cas des préchambres de turbulence, par exemple du type Ricardo, le canal de transfert a de préférence une disposition tangentielle par rapport à la préchambre. L'injecteur est généralement disposé de manière à déboucher dans la préchambre, dans une zone située à l'opposé de l'embouchure du canal de transfert.

Une bougie de préchauffage qui permet d'assurer le préchauffage et l'inflammation du mélange combustible au démarrage à froid du moteur est montée dans la culasse, de manière à comporter une partie chauffante venant en saillie à l'intérieur de la préchambre.

Dans le cas de certains moteurs à allumage par compression selon l'art antérieur comportant des préchambres de turbulence à canal de transfert tangentiel, on a préconisé l'utilisation d'un second canal de transfert rectiligne ou canal auxiliaire reliant la préchambre et la chambre principale du cylindre, de manière à déboucher dans la chambre principale du cylindre, au niveau d'une cavité placée de manière adjacente par rapport à la zone dans laquelle débouche le premier canal de transfert appelé canal de transfert principal.

Le canal auxiliaire et le canal principal de transfert débouchent dans la préchambre dans des zones situées à l'opposé l'une de l'autre suivant la largeur de la préchambre.

La disposition du canal auxiliaire par rapport au jet de carburant injecté dans la préchambre et par rapport au courant tourbillonnant d'air de combustion injecté par le canal principal assure un passage d'une certaine quantité de carburant dans la chambre principale du cylindre à travers le canal auxiliaire, avant que l'inflammation et la combustion du carburant ne se produisent dans la préchambre.

L'inconvénient d'un tel moteur suivant l'art antérieur (GB-A-2159879, fig. 3) comportant une préchambre de turbulence ayant un canal de transfert tangentiel est que la vitesse élevée des gaz dans le tourbillon qui se forme à l'intérieur de la préchambre est génératrice d'oxydes d'azote en quantité relativement importante, ces oxydes d'azote se retrouvant dans les gaz d'échappement où ils constituent des polluants indésirables. L'axe du canal auxiliaire rencontre l'axe de l'injecteur.

On connaît également des moteurs à allumage par compression qui comportent un canal de transfert débouchant dans la préchambre au voisinage de sa partie centrale et présentant une certaine inclinaison par rapport à l'axe de la préchambre parallèle à l'axe du cylindre. Du fait de cette inclinaison, l'air refoulé par le piston dans le canal de transfert est entraîné en un mouvement tourbillonnant à l'intérieur de la préchambre, les vitesses de l'air de combustion tourbillonnant étant cependant sensiblement inférieures aux vitesses de l'air tourbillonnant, dans le cas d'une préchambre de turbulence à canal tangentiel.

Cependant, dans le cas des préchambres dont le canal de transfert débouche dans une position sensiblement centrée à l'intérieur de la préchambre, les gaz d'échappement du moteur contiennent généralement des proportions élevées d'hydrocarbures et d'imbrûlés.

Le but de l'invention est de proposer un moteur à allumage par compression comportant au moins un cylindre et une préchambre communiquant avec le cylindre par l'intermédiaire d'un premier canal de transfert et d'un second canal de transfert sensiblement rectilignes et comportant un injecteur de carburant destiné à former un jet de carburant dirigé vers l'intérieur de la préchambre, ce moteur produisant en fonctionnement des gaz d'échappement renfermant des proportions d'oxydes de l'azote, d'hydrocarbures et d'imbrûlés sensiblement inférieures aux proportions de ces polluants à dans les gaz d'échappement des moteurs à allumage par compression selon l'art antérieur.

Dans ce but, le premier canal de transfert débouche dans la préchambre dans une zone sensiblement centrée sur la paroi de la préchambre dirigée vers le cylindre et le second canal de transfert dont la section est inférieure à celle du premier canal de transfert est dirigé vers l'intérieur de la préchambre de manière que son axe rencontre l'axe de l'injecteur suivant lequel se forme le jet, à l'intérieur de la préchambre et débouche dans la préchambre dans une zone excentrée.

Afin de bien faire comprendre l'invention, on va maintenant décrire à titre d'exemple, en se référant à la figure jointe en annexe, un moteur à allumage par compression suivant l'invention.

La figure unique est une vue unique en coupe partielle par un plan vertical d'un moteur Diesel suivant l'invention.

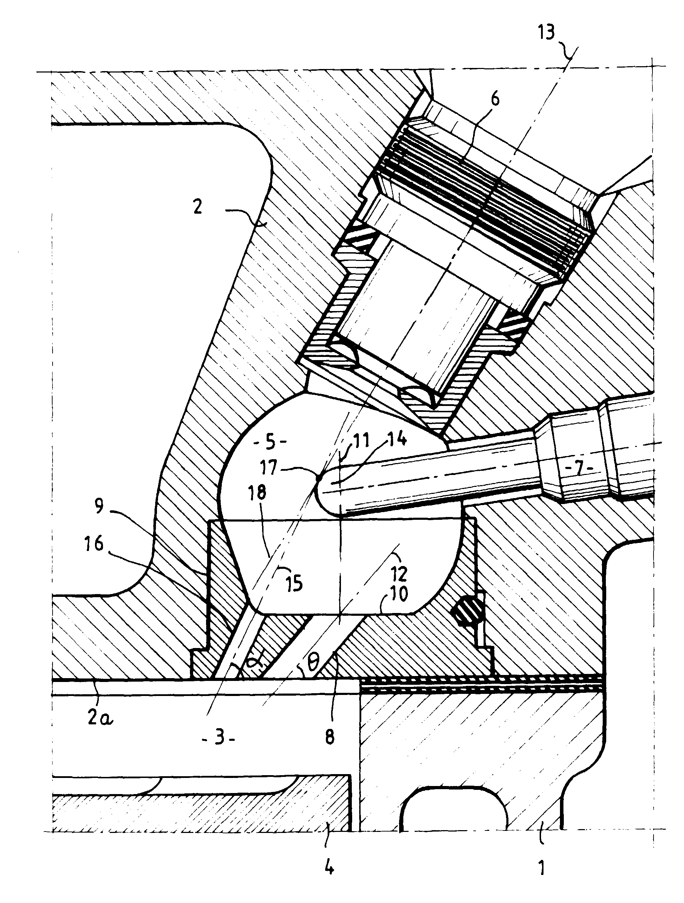

Sur la figure 1, on voit une partie du bloc cylindre 1 et de la culasse 2 d'un moteur à allumage par compression. Le bloc cylindre 1 comporte des cylindres tels que 3 dans chacun desquels se déplace un piston 4. La culasse 2 est usinée au-dessus de chacun des cylindres 3, de façon à délimiter une préchambre de turbulence 5 comportant un injecteur de carburant 6 et une bougie de préchauffage 7.

La préchambre 5 de forme sensiblement sphérique est délimitée à sa partie supérieure par une paroi hémisphérique usinée à l'intérieur de la culasse 2. La partie inférieure de la préchambre 5 est usinée à l'intérieur d'une pièce 9 rapportée et fixée à l'intérieur d'un logement de forme correspondante usiné dans la culasse 2.

La préchambre 5 communique avec la chambre principale du cylindre 3, par l'intermédiaire d'un premier canal de transfert ou canal de transfert principal 8 sensiblement rectiligne et usiné dans la pièce rapportée 9, entre une première face plane de la pièce 9 constituant une partie de la surface supérieure du cylindre 3 et une seconde face plane 10 constituant la paroi interne de la préchambre 5 dirigée vers le cylindre 3. L'axe 12 du canal de transfert 8 est incliné par rapport à l'axe vertical 11 de la préchambre 5 parallèle à l'axe du cylindre 3 et à la direction de déplacement du piston 4. L'axe 12 du canal principal de transfert 8 fait un angle aigu θ avec la surface plane de la pièce 9 délimitant la chambre du cylindre 3 à sa partie supérieure et disposée suivant le plan de joint de la culasse 2. L'angle θ est généralement voisin de 50°, cet angle pouvant être compris, de manière plus générale, entre 40° et 60°. L'angle aigu de l'axe 12 du canal principal 8 avec l'axe vertical 11 de la préchambre 5 qui est l'angle complémentaire de l'angle θ est généralement voisin de 40° et peut être compris entre 30 et 50°.

La bougie de préchauffage 7 comporte une partie chauffante 14 en saillie à l'intérieur de la préchambre dont l'extrémité est située au voisinage du centre de la préchambre 5.

L'injecteur 6 est monté dans la culasse, de manière que son axe 13 suivant lequel un jet de carburant peut être dirigé et injecté à l'intérieur de la préchambre 5 soit sensiblement tangent à l'extrémité de la partie chauffante 14 de la bougie de préchauffage 7.

Selon l'invention, la pièce rapportée 9 délimitant la préchambre 5 est usinée pour constituer un second canal de transfert rectiligne 16 reliant la préchambre 5 à la chambre principale du cylindre 3.

Le canal principal de transfert 8 débouche à l'intérieur de la préchambre 5, dans une zone de la paroi interne de la préchambre 5 dirigée vers le cylindre 3, située sensiblement au centre de cette paroi, l'axe vertical 11 de la préchambre 5 passant sensiblement par le centre de la section du canal de transfert 8, sur la paroi interne de la préchambre suivant laquelle le canal principal 8 débouche dans la préchambre.

Le canal de transfert auxiliaire 16 débouche dans la préchambre 5 dans une zone située au voisinage d'une limite latérale de la paroi interne 10 de la préchambre 5 dirigée vers le cylindre 3.

Le canal principal 8 débouche donc dans une zone centrée de la paroi 10, à l'intérieur de la préchambre 5, alors que le canal auxiliaire 16 débouche dans une zone excentrée.

La section du canal auxiliaire 16 est sensiblement inférieure à la section du canal de transfert principal 8, le diamètre du canal auxiliaire 16 et le diamètre du canal principal 8 pouvant être par exemple dans un rapport de 1 à 2, de sorte que les sections sont dans un rapport sensiblement de 1 à 4.

L'axe 15 du canal de transfert auxiliaire 16 est incliné par rapport à l'axe vertical 11 de la préchambre et fait un angle α avec la surface plane inférieure de la pièce rapportée 9 délimitant la chambre principale du cylindre 3 à sa partie supérieure et disposée suivant le plan de joint de la culasse 2.

L'angle α d'inclinaison de l'axe 15 du canal auxiliaire 16 par rapport à ce plan horizontal est généralement de l'ordre de 60° et peut être compris entre 50 et 70°.

L'angle de l'axe 15 du canal auxiliaire 16 avec l'axe vertical 11 de la préchambre 5 qui est complémentaire de l'angle α est donc voisin de 30° et peut être compris entre 20° et 40°.

L'axe 12 du canal de transfert principal 8, l'axe 15 du canal de transfert auxiliaire 16 et l'axe 13 de l'injecteur 6 suivant lequel est dirigé le jet de carburant sont tous dans un même plan de symétrie vertical de la préchambre passant par l'axe 11.

L'axe 15 du canal auxiliaire 16 est dirigé de manière à rencontrer l'axe 13 de l'injecteur 6 suivant lequel est dirigé le jet de carburant, en un point 17 situé à l'intérieur de la préchambre 5, au voisinage de l'extrémité de la partie chauffante 14 de l'électrode de préchauffage 7.

L'axe 12 du canal principal 8 est dirigé de manière qu'il ne rencontre pas l'axe 13 suivant lequel est dirigé le jet de carburant, à l'intérieur de la préchambre 5. Le canal de transfert principal 8 et le canal de transfert auxiliaire 16 ont des directions divergentes dans le sens allant du cylindre 3 vers la préchambre 5.

Lorsque le piston 4 du moteur remonte à l'intérieur du cylindre 3, de l'air admis dans le cylindre 3 est refoulé par l'intermédiaire des canaux de transfert 8 et 16 dans la préchambre 5.

L'air refoulé par l'intermédiaire du canal de transfert principal 8 est mis en mouvement à l'intérieur de la préchambre 5 pour constituer un tourbillon centré approximativement au centre de la préchambre 5. Du fait de la position centrée sur la paroi interne 10 de la section du canal de transfert 8 par laquelle ce canal débouche dans la préchambre 5, les courants tourbillonnaires d'air refoulé dans la préchambre 5 ont un rayon de courbure relativement faible et une vitesse modérée.

L'air refoulé à l'intérieur du canal 16 de faible section constitue un courant rectiligne traversant la préchambre 5 suivant la direction de l'axe 15.

Lorsque l'injecteur 6 est mis en fonctionnement pendant la phase de remontée du piston 4, pour réaliser l'injection d'un jet de carburant 18 suivant la direction de l'axe 13, le jet de carburant 18 rencontre le jet d'air rectiligne provenant du canal de transfert auxiliaire 16 au point 17.

Le jet d'air provenant du canal auxiliaire 16 qui présente une vitesse importante, du fait de la faible section du canal 16 produit une pulvérisation du jet de carburant 18, ce qui favorise l'inflammation et la combustion du carburant à l'intérieur du courant d'air à haute pression introduit dans la préchambre 5.

La combustion se propage, à partir du point d'inflammation, dans la préchambre 5 et par l'intermédiaire du canal de transfert 8, dans la chambre principale du cylindre 3.

Lors d'un démarrage à froid, la partie chauffante 14 de la bougie 7 permet d'assurer l'échauffement et l'inflammation du mélange de carburant pulvérisé et d'air de combustion, au voisinage du point 17.

On a pu observer, lors du fonctionnement d'un moteur comportant, pour chacun de ses cylindres, une préchambre communiquant avec le cylindre par l'intermédiaire de deux canaux de transfert tels que décrits, une réduction sensible de la proportion de polluants dans les gaz d'échappement, par rapport aux proportions de polluants habituellement présentes dans les gaz d'échappement des moteurs à allumage par compression selon l'art antérieur.

En particulier, on a pu observer une diminution importante des oxydes d'azote dans les gaz d'échappement. Cette diminution de la quantité pondérale des oxydes d'azote dans les gaz d'échappement est de l'ordre de 30 à 40 % par rapport aux moteurs à allumage par compression selon l'art antérieur comportant des préchambres de turbulence comportant un seul canal de transfert de direction tangentielle par rapport aux parois de la préchambre.

On a pu également enregistrer une diminution extrêmement sensible de la proportion d'hydrocarbures et d'imbrûlés dans les gaz d'échappement d'un moteur suivant l'invention. Cette diminution est de 20 à 30 % en poids par rapport à un moteur équipé de préchambres de turbulences ayant un seul canal de transfert à disposition tangentielle.

Les phénomènes mis en jeu, lors de l'allumage et de la combustion d'un carburant à l'intérieur d'une chambre de combustion d'un moteur à allumage par compression sont extrêmement complexes et il est pratiquement impossible de prévoir l'effet sur la qualité de la combustion et sur les quantités de polluants rejetées dans les gaz d'échappement, d'une disposition particulière d'un canal de transfert principal qui peut être associé à un canal de transfert auxiliaire reliant l'un et l'autre une préchambre à une chambre principale d'un cylindre. En effet, les différents facteurs pouvant influer sur la combustion sont susceptibles de se combiner de manière additive ou au contraire de se neutraliser suivant la façon dont ils interviennent pendant la phase d'allumage et de combustion dans la préchambre et dans la chambre principale du cylindre.

Les raison qui peuvent être données pour expliquer les excellents résultats obtenus grâce à la disposition suivant l'invention, en ce qui concerne les rejets de polluants, n'ont en conséquence qu'une valeur indicative et ne sauraient être retenues en toute hypothèse pour limiter le cadre d'application de l'invention.

C'est ainsi que la disposition centrale par rapport à la paroi interne de la préchambre, de la section par laquelle le canal principal débouche dans la préchambre peut expliquer partiellement la diminution de la quantité d'oxydes de l'azote dans les gaz d'échappement et que la pulvérisation du carburant par le courant d'air comprimé provenant du canal auxiliaire de transfert peut permettre d'expliquer la combustion plus complète du carburant ; cependant, il ne peut apparaître évident à l'homme du métier connaissant les problèmes de combustion dans les moteurs à allumage par compression que la combinaison d'un canal de transfert principal et d'un canal de transfert auxiliaire suivant l'invention puisse permettre de diminuer la quantité totale de polluants sous la forme d'oxydes de l'azote, d'hydrocarbures et d'imbrûlés.

L'invention permet d'améliorer la combustion et de diminuer les rejets de polluants dans des proportions bien supérieures à ce qui pourrait résulter des effets séparés de la disposition du canal de transfert principal d'une part et du canal de transfert auxiliaire d'autre part.

L'invention ne se limite pas au mode de réalisation qui a été décrit.

C'est ainsi que l'inclinaison du canal de transfert principal et l'inclinaison du canal de transfert auxiliaire peuvent être différentes de celles qui ont été données à titre d'exemple.

De même, le rapport des sections du canal de transfert auxiliaire au canal de transfert principal peut être différent du rapport qui a été donné ci-dessus à titre purement indicatif.

Les canaux de transfert principal et auxiliaire de chacune des préchambres peuvent être usinés dans une pièce rapportée dans la culasse, comme il a été décrit plus haut, ou usinés directement dans la masse de la culasse.

Bien que l'invention s'applique de préférence aux moteurs à allumage par compression utilisés sur les automobiles, il est possible également d'envisager des applications à des moteurs à allumage par compression pour d'autres usages.

La position de la bougie 7 peut être différente de celle représentée sur la figure. La bougie 7 peut être par exemple sensiblement verticale.

## Revendications

1. Moteur à allumage par compression comportant au moins un cylindre (3) et une préchambre (5) communiquant avec le cylindre (3) par l'intermédiaire d'un premier canal de transfert (8) et d'un second canal de transfert (16) sensiblement rectilignes et comportant un injecteur de carburant (6) destiné à former un jet de carburant (18) dirigé vers l'intérieur de la préchambre (5), le second canal de transfert (16) dont la section est inférieure à celle du premier canal de transfert (8) étant dirigé vers l'intérieur de la préchambre (5), de manière que son axe (15) rencontre l'axe (13) de l'injecteur (6) suivant lequel se forme le jet (18), à l'intérieur de la préchambre (5) et débouchant dans la préchambre (5) dans une zone excentrée. caractérisé par le fait que le premier canal de transfert (8) débouche dans la préchambre (5), dans une zone sensiblement centrée sur la paroi (10) de la préchambre (5) dirigée vers le cylindre (3).

2. Moteur à allumage suivant la revendication 1, caractérisé par le fait que l'axe (15) du canal auxiliaire (16) présente un angle d'inclinaison α compris entre 50 et 70°, par rapport au plan de joint (2a) d'une culasse (2) dans laquelle est disposée la préchambre (5), délimitant une chambre principale du cylindre (3) et suivant lequel les canaux de transfert (8, 16) débouchent dans le cylindre (3).

3. Moteur suivant la revendication 2, caractérisé par le fait que l'angle α d'inclinaison de l'axe (15) du canal auxiliaire (16) a une valeur de l'ordre de 60°.

4. Moteur suivant l'une quelconque des revendications 1 à 3, caractérisé par le fait que l'axe (12) du canal de transfert principal (8) présente un angle d'inclinaison θ par rapport au plan de joint (2a) de la culasse (2) compris entre 40 et 60°.

5. Moteur suivant la revendication 4, caractérisé par le fait que l'angle θ d'inclinaison de l'axe 12 du canal de transfert principal (8) par rapport au plan de joint (2a) a une valeur de l'ordre de 50°.

6. Moteur suivant l'une quelconque des revendications 1 à 5, comportant de plus une bougie d'allumage (7) ayant une partie chauffante (14) en saillie à l'intérieur de la préchambre (5), caractérisé par le fait que l'axe (15) du canal de transfert auxiliaire (16) rencontre l'axe (13) de l'injecteur (6) suivant lequel est dirigé un jet de carburant (18), en un point (17) situé au voisinage de l'extrémité de la partie chauffante (14) de l'électrode de préchauffage (7).

7. Moteur suivant l'une quelconque des revendications 1 à 6, caractérisé par le fait que le canal principal de transfert (8) et le canal auxiliaire de transfert (16) sont usinés à l'intérieur d'une pièce (9) rapportée dans une culasse (2) à l'intérieur de laquelle est disposée la préchambre (5) et définissant une partie de la paroi de la préchambre (5).

8. Moteur suivant l'une quelconque des revendications 1 à 7, caractérisé par le fait que le canal de transfert principal (8) et le canal de transfert auxiliaire (16) ont des directions divergentes dans le sens allant de la chambre principale du cylindre (3) vers la préchambre (5).

## Patentansprüche

1. Dieselbrennkraftmaschine mit mindestens einem Zylinder (3) und einer Vorkammer (5), die mit dem Zylinder (3) über einen ersten Übertragungskanal (8) und einen zweiten Übertragungskanal (16), die im wesentlichen geradlinig sind, verbunden ist, und mit einem Kraftstoffeinspritzer (6), der dazu bestimmt ist, einen auf das Innere der Vorkammer (5) zu gerichteten Kraftstoffstrahl (18) zu bilden, wobei der zweite Übertragungskanal (16), dessen Querschnitt kleiner als der des ersten Übertragungskanals (8) ist, so auf das Innere der Vorkammer (5) zu gerichtet ist, daß seine Achse (15) die Achse (13) des Einspritzers (6), in der sich der Stahl (18) bildet, im Inneren der Vorkammer (5) schneidet, und in der Vorkammer (5) in einem exzentrischen Bereich ausmündet, dadurch gekennzeichnet, daß der erste Übertragungskanal (8) in der Vorkammer (5) in einem Bereich ausmündet, der auf der dem Zylinder (3) zugewandten Wand (10) der Vorkammer (5) im wesentlichen zentriert ist.

2. Dieselbrennkraftmaschine nach Anspruch 1, dadurch gekennzeichnet, daß die Achse (15) des Nebenkanals (16) einen Neigungswinkel α von 50 bis 70° bezüglich der Trennebene (2a) eines Zylinderkopfs (2), in dem die Vorkammer (5) angeordnet ist, aufweist, Trennebene, die eine Hauptkammer des Zylinders (3) abgrenzt und auf der die Übertragungskanäle (8, 16) in den Zylinder (3) münden.

3. Dieselbrennkraftmaschine nach Anspruch 2, durch gekennzeichnet, daß der Neigungswinkel α der Achse (15) des Nebenkanals (16) einen Wert von etwa 60° hat.

4. Dieselbrennkraftmaschine nach einem der Ansprüche 1 bis 3, dadurch gekennzeichnet, daß die Achse (12) des Hauptübertragungskanals (8) einen Neigungswinkel ϑ bezüglich der Trennebene (2a) des Zylinderkopfs (2) von 40 bis 60° besitzt.

5. Dieselbrennkraftmaschine nach Anspruch 4, dadurch gekennzeichnet, daß der Neigungswinkel ϑ der Achse (12) des Hauptübertragungskanals (8) bezüglich der Trennebene (2a) einen Wert von etwa 50° hat.

6. Dieselbrennkraftmaschine nach einem der Ansprüche 1 bis 5 mit mehr als einer Zündkerze (7) mit einem in das Innere der Vorkammer (5) hervorstehenden Heizteil (14), dadurch gekennzeichnet, daß die Achse (15) des Nebenübertragungskanals (16) die Achse (13) des Einspritzers (6), in welcher ein Kraftstoffstrahl (18) gerichtet ist, an einem nahe dem Ende des Heizteils (14) der Vorheizelektrode (7) gelegenen Punkt (17) schneidet.

7. Dieselbrennkraftmaschine nach einem der Ansprüche 1 bis 6, dadurch gekennzeichnet, daß der Hauptübertragungskanal (8) und der Nebenübertragungskanal (16) im Inneren eines in einem Zylinderkopf (2) angebrachten Teils (9) geformt sind, in dessen Innerem die Vorkammer (5) angeordnet ist und das einen Teil der Wand der Vorkammer (5) definiert.

8. Dieselbrennkraftmaschine nach einem der Ansprüche 1 bis 7, dadurch gekennzeichnet, daß der Hauptübertragungskanal (8) und der Nebenübertragungskanal (16) von der Hauptkammer des Zylinders (3) zur Vorkammer (5) divergierende Richtungen haben.

## Claims

1. A compression-ignition engine comprising at least one cylinder (3) and a precombustion chamber (5) connected to the cylinder (3) by way of a first transfer passage (8) and a second transfer passage (16) which are substantially rectilinear, and comprising a fuel injector (6) for forming a jet of fuel (18) directed towards the interior of the precombustion chamber (5), wherein the second transfer passage (16) with a cross-section smaller than the cross-section of the first transfer passage (8) is directed towards the interior of the precombustion chamber (5) in such a manner that its axis (15) meets the axis (13) of the injector (6) along which the jet (18) is formed, inside the precombustion chamber (5) and opens into the precombustion chamber (5) in an eccentric area, characterised in that the first transfer passage (8) opens into the precombustion chamber (5) in a substantially central area on the wall (10) of the precombustion chamber (5) facing the cylinder (3).

2. An ignition engine according to Claim 1, characterised in that the axis (15) of the auxiliary passage (16) has an angle of inclination α of between 50 and 70°, in relation to the joint face (2a) of a cylinder head (2) in which the precombustion chamber (5) is arranged, which joint face bounds a main chamber of the cylinder (3) and along which the transfer passages (8, 16) open into the cylinder (3).

3. An engine according to Claim 2, characterised in that the angle of inclination α of the axis (15) of the auxiliary passage (16) has a value of approximately 60°.

4. An engine according to any one of the preceding claims 1 to 3, characterised in that the axis (12) of the main transfer passage (8) has an angle of inclination θ, in relation to the joint face (2a) of the cylinder head (2), of between 40 and 60°.

5. An engine according to Claim 4, characterised in that the angle θ of inclination of the axis 12 of the main transfer passage (8) in relation to the joint face (2a) has a value of approximately 50 °.

6. An engine according to any one of Claims 1 to 5, comprising in addition one spark plug (7) having a heating member (14) projecting inside the precombustion chamber (5), characterised in that the axis (15) of the auxiliary transfer passage (16) meets the axis (13) of the injector (6) along which a jet of fuel (18) is directed at a point (17) adjacent the end of the heating member (14) of the preheating electrode (7).

7. An engine according to any one of Claims 1 to 6, characterised in that the main transfer passage (8) and the auxiliary transfer passage (16) are machined from one member (9) mounted in a cylinder head (2), inside which the precombustion chamber (5) is arranged, and defining a section of the wall of the precombustion chamber (5).

8. An engine according to any one of Claims 1 to 7, characterised in that the main transfer passage (8) and the auxiliary transfer passage (16) diverge in the direction going from the main chamber of the cylinder (3) to the precombustion chamber (5).
